# EUROPEAN PATENT SPECIFICATION

(11) **EP 3 758 348 B1**
(45) Date of publication and mention of the grant of the patent: **06.11.2024**
(21) Application number: 19182252.7
(22) Date of filing: 25.06.2019
(51) Int. Cl.: H04W 4/24, H04M 3/487, G06Q 30/02, H04M 15/00

(54) **METHOD AND SYSTEM FOR DISTRIBUTING PERSONALIZED MESSAGES**
VERFAHREN UND SYSTEM ZUR VERTEILUNG VON PERSONALISIERTEN NACHRICHTEN
PROCÉDÉ ET SYSTÈME DE DISTRIBUTION DE MESSAGES PERSONNALISÉS

(43) Date of publication of application: 30.12.2020
(73) Proprietor: Bremer, Wiebke, 21335 Lüneburg (DE)
(72) Inventor: WANECK, Peter, 6315 Oberägeri (CH)
(74) Representative: SONN Patentanwälte GmbH & Co KG

(56) References cited:
- US-A1- 2004 054 576
- US-A1- 2008 057 915

## Description

The invention concerns a method for distributing personalized messages to one or more network clients participating in a real-time conversation over a network and a system for providing real-time conversations over a network and distributing personalized messages to one or more network clients participating in a real-time conversation.

In particular the invention concerns the use of advertising in connection with Voice-over-Internet-Protocol (VoIP) conversations. Where one participant of such a conversation does not use a VoIP-enabled terminal, the VoIP-connection is "terminated" at a gateway between the two parties, wherein the gateway provides an interface to a different technology for relaying the conversation, e.g. from VoIP to a landline telephone connection. Such gateway services are generally paid and subject to connections fees. These fees can be cross-financed partly or completely with advertising revenue. Thus, the stakeholders involved in this application are: the caller (first network client), the callee (i.e. the person being called; second network client), an advertiser (provider of advertising content and revenue), and optionally a gateway provider (usually also a public switched telephone network (PSTN) carrier and/or provider of real-time conversation).

It is well-known to use credit earned from advertising for cross-financing connection fees. The amount of credit earned is related to the efficacy of the advertisement, which in turn depends on the personal interest of the consumer of the advertisement in the advertised product or service. Different methods have been proposed to achieve personalisation of advertisements. One method (proposed by Pudding Media and used in their "Blyk" application) is to analyse the content of real-time conversations and generate advertisements suiting the topic of the conversation as determined by the analysis.

For placing the advertisement, it has been described to connect a subscriber to an advertiser prior to call completion (see US 7,376,223 B2) or to interpose a communication with a commercial message (see US 2013/0051539 A1) or to insert commercial information or advertisements into a wireless mobile communication based on time and location of the subscriber of a communications service (see WO 00/35216 A1).

US 2008/057915 A1 shows a system and method in which a call or message between two mobile phones is financed by advertising. In this method, the caller or sender selects a sponsor and can choose the content of the advertising. The called subscriber or recipient is shown the selected advertising when they accept the call.

US 2004/054576 A1 also discloses a method for embedding advertising in communications between two mobile subscribers. The method relies on a database of ad topics and advertising content assigned to them. The decision as to which advertising is displayed is made by a message centre based on pre-set topic preferences of both subscribers.

It is an object of the present invention, to provide a method and system for improving the efficacy of advertisements targeted at participants in a real-time conversation. Consequently, the present method and system help to increase the revenue generated from advertisements and thus increase the potential for cross-financing connection fees associated with real-time conversations.

According to the present invention, a method as described in the outset comprises the steps of:
providing a database of available message topics, wherein each message topic is associated with one or more pre-defined messages;
pre-selecting a plurality of message topics from the database of available message topics;
transmitting the pre-selected message topics to a first network client participating in the real-time conversation;
recording at the first network client a selection of one message topic from the pre-selected message topics;
transmitting a message associated with the selected message topic to a second network client participating in the real-time conversation with the first network client, wherein the second network client is different from the first network client;
displaying the message associated with the selected message topic at the second network client.

Correspondingly, according to the present invention, a system as described in the outset comprises:
a database of available message topics, wherein each message topic is associated with one or more pre-defined messages;
means for pre-selecting a plurality of message topics from the database of available message topics and transmitting the pre-selected message topics to a first network client participating in the real-time conversation;
means for receiving a selection of one message topic from the pre-selected message topics from the first network client and transmitting a message associated with the selected message topic to a second network client participating in the real-time conversation with the first network client, and means for displaying the message associated with the selected message topic at the second network client, wherein the second network client is different from the first network client.

The invention achieves improved personalisation of an advertisement for participants in a real-time conversation by enabling user selection of a message topic suitable for a second participant (user of the second network client) by a first participant (user of the first network client). It is based on the realization that the first participant is aware of at least one personal interest of the second participant. Thus, the first participant uses this knowledge to select a suitable message topic from a plurality of pre-selected message topics, i.e. a message topic that best aligns with the personal interest of the second participant.

Each message topic is associated with one or more pre-defined messages. Where a message topic is associated with only one message, the selection of the message topic is effectively a selection of a message. In a simplified embodiment, each message topic may be a message. In an alternative embodiment, each message topic may correspond to a trademark and the messages associated with each of the message topics may be advertisements of different products offered under the trademark corresponding to the message topic or different aspects or views of one such product. The user or account associated with the first network client receives a predefined amount of credit if the advertisement is displayed at the second network client, if the second user watches the advertisement and/or if the second user interacts with the advertisement. Depending on the advertisement and the level of success of the advertisement, different amounts of credit may be offered. Consequently, the first user will have an interest in making an educated selection.

The database of available message topics can be provided by known solutions for booking advertisements. For example, the database can be hosted by the provider for the real-time conversation. Advertisers or agencies provide one or more message topics and associated messages (e.g. text, pictures, audio clips, video clips or combinations thereof). The database provider enters these message topics and messages into his database directly or by linking to remotely hosted content (e.g. in a content delivery network). Since an arbitrary number of message topics and messages may be managed by the database, generally only a part of the available message topics is provided to the first network client for selection. Otherwise the number of choices would become overwhelming and annoying. Therefore, a plurality of message topics is pre-selected from the database of available message topics. This pre-selection may be random or may be based on previous selections or preferences of the users of the first network client or second network client. For example, two, three or four message topics may be pre-selected from all available message topics. The pre-selection can be based on user settings, callee profile (e.g. based on analysis of previous selections and view confirmations) and targeting requirements, advertiser budget, form of advertising (voice, video, image, etc.) and the location of the caller, the callee and a target region associated with the message (e.g. of an advertisement offer; filter by "geofencing"). User settings may be used to generally configure personal interests by: selecting an advertiser cluster (e.g. lifestyle, travel, sports, motor, ...), selecting bans/exceptions of certain topics, product types or specific advertisers, selecting callee preferences (explicitly or implicitly) on yes/no and category, and selecting treatment of benefits (virtual account, direct usage for credit line, donation). Targeting requirements may include parameters defining the intended target audience of an advertising campaign, e.g. language, location or region, time of payout, etc. The advertiser budget may be used as a parameter in an automated auctioning platform, which is used for balancing supply (opportunities to make it into a pre-selection) and demand (message topics fitting the pre-selection profile) to achieve highest relevance for the advertiser and optimum monetization of the platform for the carrier.

After the pre-selected message topics have been transmitted to the first network client and a selection of one message topic from the pre-selected message topics has been recorded at the first network client, one of the messages associated with the selected message topic is transmitted to the second network client and displayed at the second network client. Displaying means that the message can be displayed on a screen and/or played using one or more sound speakers of the second network client. If more than one message is associated with the selected message topic, the advertisement provider (or database provider) may select one message at random or based on a history of the second network client (i.e. to avoid playing the exact same message repeatedly) and/or based on preferences of the advertiser.

The network clients are preferably mobile smart devices (smartphones or tablet computers), where the network client functionality associated with the present method and system is implemented as a software application or "App" running on top of a general-purpose operating system.

Preferably, the present method is characterized by establishing a communication link between at least two network clients to provide the real-time conversation only after the selection of one message topic is recorded. In this way, the first network client has to perform the selection beforehand, i.e. before beginning the real-time conversation. This has the advantage, that the message can be displayed at the second network client immediately after the real-time conversation ends, i.e. without any delay associated with the selection process performed at the first network client. Moreover, the message topic selection may become part of the subsequent conversation, improving the knowledge of the first user of the personal interests of the second user and thus improving the quality of future selections.

Alternatively, the selection may be performed after the real-time conversation at the option of the caller and/or the callee. In this case, the message topics may include personal suggestions as a follow-up to the conversation, without associated rewards. Such options increase the acceptance of the service as being not only a pure advertisement application. E.g. options presented for selection may comprise: personal suggestions based on analytics (e.g. "we should catch up for a tennis game again"), lifestyle messages based on trending topics (e.g. "don't forget to register for the election") and commercial messages (advertising; e.g. "buy a burger and get 10% discount"). Optionally, user profiles may include the possibility to integrate personally-configured messages as an option of the selection (e.g. "dude, check out my blog").

In this context, it is particularly advantageous to display the message associated with the selected message topic at the second network client after the communication link is terminated; preferably, immediately after the communication link is terminated. In this way, the focus and attention of a user of the second network client can be extended for receiving the displayed message and delayed interruption of this user can be avoided.

As has been pointed out above, if the selected message topic is associated with a group of messages, the message transmitted to the second network client can be picked at random from the group of messages (using a uniform random distribution). In that way, on average every message in the group is displayed an equal number of times while avoiding a fixed sequence, which would reduce the attention paid to the - expected - message.

Correspondingly, and with similar advantages, within the present system, for cases where the selected message topic is associated with a group of messages, the system may comprise means for picking the message transmitted to the second network client at random from the group of messages.

According to a preferred embodiment, the present method may include sending a confirmation of the displayed message together with an identification of the network client displaying the message to a reward service and/or to a billing service, in particular when the displayed selected message is interacted with. Such confirmations make it possible to adjust the amount of credit rewarded to the user of the first network client based on the success of the message. For example, the reward service and/or billing service may be configured to process such confirmations and offer a first amount of credit when the message is confirmed to be displayed and a second, additional amount of credit, if the user of the second network client interacts with the message, e.g. clicks a link to an e-commerce website or web-shop.

For improving the quality and usefulness of pre-selection, the present method preferably may be characterized by: providing a user database comprising entries of registered users and their associated network client; and recording and storing for each registered user a profile, user preferences, past selections of message topics and/or past received messages. In that way, the pre-selection may be focussed on message topics frequently picked for the user of the second network client or even interacted with by said user.

Correspondingly, and with similar advantages, the present system can be characterized in that the system further comprises a user database comprising entries of registered users and their associated network clients and configured to record and store user profiles, user preferences and received message selections.

In this context, it is particularly advantageous if the present method is characterized by: selecting a plurality of message topics based on a stored user profile and user preferences associated with the first network client and/or the second network client. Such an educated pre-selection based on a user profile enables a user of the first network client to select a suitable topic even if they know little about the personal interest of the user of the second network client.

In a preferred embodiment of the present method, it is characterized by: selecting a plurality of message topics based on targeting requirements associated with each message topic, in particular targeting requirements matching a user profile or preferences. The targeting requirements may be stored in the same or a different database, e.g. in the form of filters applicable to certain user profile properties.

In one preferred use-case, the presented invention provides a comprehensive promotion platform to sponsors that can promote their brands, products and services to a group of users. At the same time, users of the service have the ability to choose and recommend sponsors, products, promotions and advertisements to their friends (participating in real-time conversations) thus earning points and coupons, creating a personal electronic savings account. Assets from this account can be utilized for free usage of the offered communication services (voice, video, messaging) or to get offered services and products. The invention generally concerns methods and systems that allow the personal involvement of the user in the promotion of products thus creating earnings for their own use as well as for their friends. The invention provides methods for managing such communication and activities. Moreover, methods to collaboration of sponsors and users in a totally mobile environment are proposed.

The invention will be defined in more detail below by means of preferred exemplary embodiments, to which it is not to be limited to, however, and with reference to the drawings. In detail:
Fig. 1 schematically shows an exemplary structure of a system according to the present invention; and
Fig. 2 schematically shows a sequence diagram of data exchanged between a first network client, a provider for real-time conversations and a second network client.

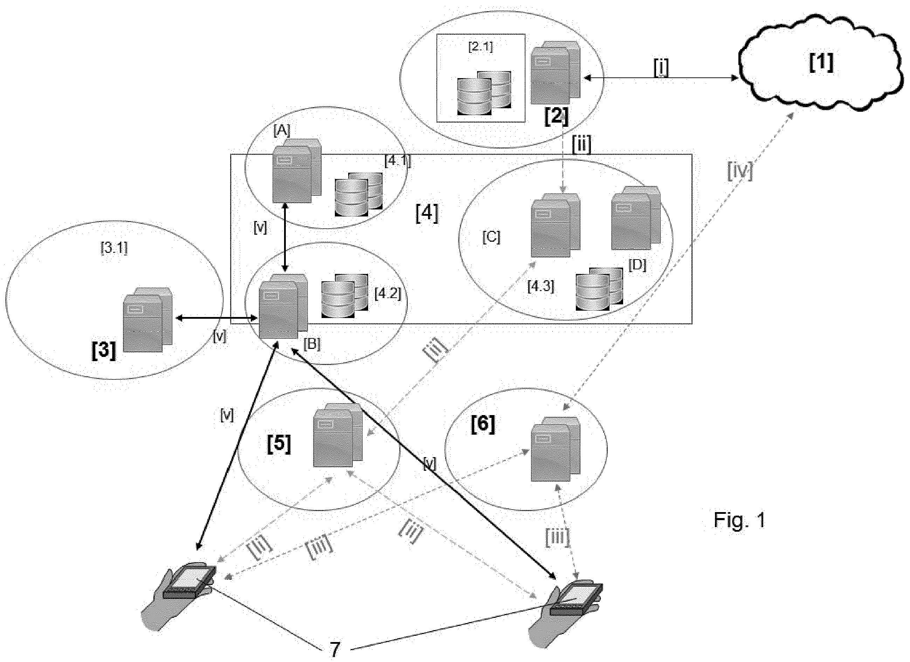

In the overall architecture of the present system as shown in Fig. 1, the system may comprise a cluster of different services 1, 2, 3, 4, 5 and 6 and respective servers. The flow of information traversing the system is represented by arrows i, ii, iii, iv, v between these services. For easier orientation, the services and exchanged information is described below item-by-item:
The services shown in Fig. 1 are: a Public Switched Telephone Network (PSTN) 1; a Session Border Controller (SBC) 2; Content Delivery Network (CDN) 3; a main database cluster 4; an edge proxy server 5 for Session Initiation Protocol (SIP) connections; and a Traversal Using Relays around NAT (TURN) server 6.

The SBC 2 is a device regularly deployed in Voice over Internet Protocol (VoIP) networks to exert control over the signalling and usually also the media streams involved in setting up, conducting, and tearing down telephone calls or other interactive real-time media communications. It comprises a Galera Cluster 2.1. Galera Cluster is an easy-to-use, high-availability database solution, which provides high system uptime, no data loss and scalability for future growth.

The CDN 3 (also "content distribution network" web servers) is a globally distributed network of proxy servers deployed in multiple data centres at different geographic locations. A CDN is generally configured to serve content to end-users with high availability and high performance. In Fig. 1 it is indicated with an Advanced Content Delivery Network Cloud (ACDNC) 3.1.

The main database cluster 4 in Fig. 1 is another Galera Cluster. Galera Cluster for MySQL is a true Multimaster Cluster based on synchronous replication. The main database cluster 4 comprises different Galera nodes for specific functions: a first node 4.1 provides a provisioning server cluster A, a second node 4.2 provides a Cluster Switch System (CSS) cluster B, and a third node 4.3 provides a core proxy cluster C and a billing cluster D.

The edge proxy server 5 is a proxy server that is positioned on the edge of an intranet and connects to an origin server through the Internet.

Traversal Using Relays around NAT (TURN), provided by the TURN server 6, is a protocol that assists in traversal of network address translators (NAT) or firewalls for multimedia applications such as real-time conversations.

The network clients 7 in this example are smartphones equipped with a special-purpose mobile application that configures the smartphones as network clients according to the present disclosure. The mobile application can be made available in iOS compatible and Android compatible versions.

The information flows shown in Fig. 1 are the following:
SIP flow i: Session Initiation Protocol (SIP) is a communications protocol for signalling and controlling multimedia communication session such as real-time voice and video calls.

Transport Layer Security (TLS) flow ii: For secure transmissions of SIP messages, the protocol may be encrypted with TLS. A preferred implementation of the present method uses SIP/TLS.

Media streams (e.g. voice or video) iii: For the transmission of media streams SIP typically employs the Real-time Transport Protocol (RTP) iv or Secure Real-time Transport Protocol (SRTP). Many VoIP applications send RTP data over the public Internet in clear, thus the data is not protected from eavesdropping or modification. Therefore, most VoIP applications are considered insecure today. During the last years several activities started to enhance the security of RTP.

The Secure Real-time Transfer Protocol (SRTP) enhances security for RTP and provides integrity and confidentiality for RTP media connections. To use SRTP in an efficient way, VoIP applications should be able to negotiate keys and other parameters in an automatic fashion.

ZRTP is a protocol that negotiates the keys and other information required to setup a SRTP audio and video session
A preferred implementation of the present method uses the ZRTP protocol to ensure encryption for voice calls between app users.

A RESTful application program interface (API) v: This is an API that uses HTTP requests to GET, PUT, POST and DELETE data to/from a web server. A RESTful API - also referred to as a RESTful API web service - is based on representational state transfer (REST) technology, an architectural style and approach for communications often used in web services development. A preferred implementation of the present method and system uses this type of API for the communication of recommendations between the apps (network clients) used by the users and the external systems providing the specific offering (e.g. advertising agencies, etc.).

The first and second network clients 7 shown in Fig. 1 can be general-purpose mobile terminals, such as smartphones or tablet computers. They can be configured to participate in the present system by running a dedicated software application ("App"). To initialize the App, it can be downloaded from an appropriate server (e.g. using platform-specific mechanisms, like "App Store" or "Play Store"). On first start of the App, a one-time online registration is performed, where the user optionally specifies personal data (age, gender, income, etc.), a default selection of consumer preference data is fetched to form an advertisement cluster from available clusters and products, if desired a specific personal reference cluster is created, a user account ("eAccount") is created.

All customer related data as well as core service definition data, including a database of available message topics, is stored at the second node 4.2. Generally, all nodes (or servers) contain specific user data (e.g. messages in transit from one user to the destination user until the message is derived). The CDN 3, or - more specifically - the ACDNC 3.1, actually perform the function of getting the message data, finding the delivery device and deliver the data (e.g. message, file or photo). The servers of the CDN 3 are performing all functions and message handling notifications (i.e. notify the sender the message has been delivered, remove by the receiving party). Group messaging is handled as one user sending to many. The sender message is stored in the database at the second node 4.2 until delivered to all, or until the timeout functions will indicate that the message will never be delivered. The distribution functions may be handled by the applications servers. Topic data is always marked from the sender device. In detail, the second node 4.2 performs a pre-selection of a plurality of message topics and receives a selection of one message topic from the sender client. It communicates this selection to the CDN 3, which then picks and distributes one message picked from the group of messages associated with the selected topic. User related statistics may be stored at optional analytics servers that are not user specific and are not part of the diagram. Additionally, compliance database servers may be provided to store user database general information.

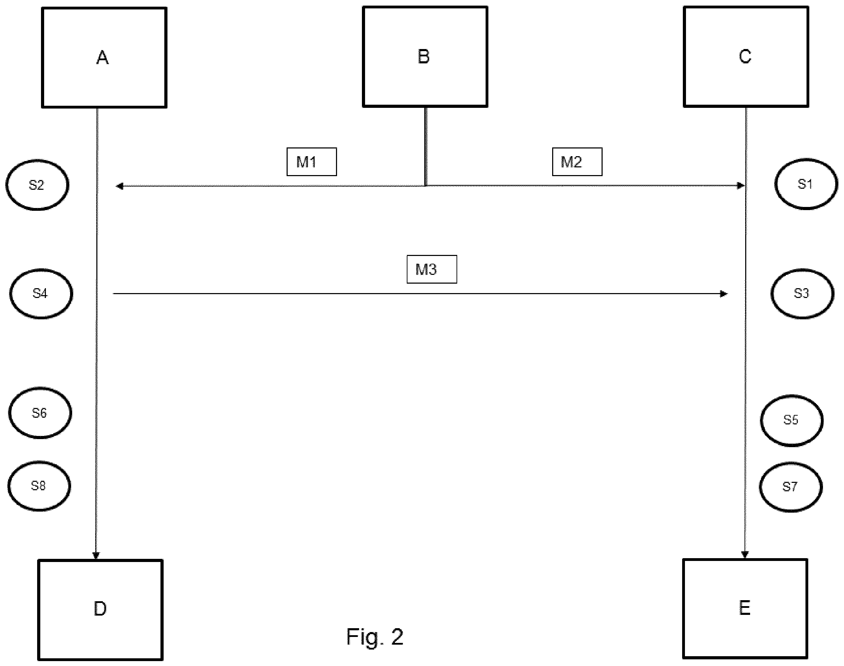

An exemplary use-case of the present method is displayed in Fig. 2. The method execution is initiated by a caller, i.e. a first user, who desires to have a real-time conversation with a second user (the callee), at the first network client A. In a first step S2, the first network client receives an update M1 of the available messages or message topics. This update M1 can be performed automatically on start of the network client (App) or at regular intervals selected by the system in the background. The update M1 may be based on the user profile, e.g. limited to topics previously selected by the first user. Similarly, an update M2 is received by the second network client C of the second user in step S1. The updates M1, M2 are provided by the conversation and advertisement service B (simplified as one service in Fig. 2, but possibly a group of services as described in connection with the system shown in Fig. 1). This service B provides a database of available message topics, wherein each message topic is associated with one or more pre-defines messages.

The real-time conversation (voice call, video call, messaging) is initiated by the caller in step S4 using the App. Upon initiating the connection, service B pre-selects a plurality of message topics from the database of available message topics based on the user profile of the callee and the caller. It transmits the pre-selected message topics to the caller. The caller selects one of a plurality of message topics presented in a list of recommendations according to the personal interest of the callee. For example, the caller can select a message topic by swiping through the list of recommendations for the callee and confirm the selection by touching the appropriate screen. Alternatively, the system may provide a preference, e.g. a pre-selected recommendation that can be directly confirmed. The selection of one message topic from the plurality of pre-selected message topics is recorded by the first network client A of the caller and the selected message topic M3 is sent to the second network client C together with the request for a connection to perform the real-time conversation. At step S3 the callee at the second network client C receives the selected message topic M3 and accepts the request and the real-time conversation starts.

At step S5 and S6, the conversation is terminated by one of the parties (caller or callee). During the conversation, the second network client C fetches one or more of the messages associated with the selected message topic M3 from the service B and the one or more messages are transmitted to the second network client C. The service B stores the selection as a past selection in the profiles of the caller and the callee, which can be used for future pre-selection. Immediately after the communication link for the conversation is terminated, in step S7, the App at the second network client C displays the fetched message corresponding to the selected message topic M3, i.e. one or more of the messages associated with the selected message topic M3. Optionally, a message can also be displayed to the caller in step S8, according to a selection or recommendation from the callee performed after the communication or according to the user profile of the caller. The caller and/or the callee may have the option to view or not to view the message, i.e. to skip displaying of the message.

After one or more messages are displayed, a confirmation of the displayed message(s) together with an identification of the network client is sent to the service B, where an amount of credit points earned by the caller (the computation step is indicated as D) and optionally by the callee (the computation step is indicated as E) is computed based on the kind and type of the message and any interaction with the message. The computed points and/or coupons independent from the service B are granted as a reward to the respective user account or network client profile of the caller or callee, who accepted to view the message (i.e. who did not skip viewing the message). Otherwise, if the user skips viewing the message, no reward is granted. If the callee accepts to view the message, the caller may be granted an independent reward to his user account. This reward may be part of the information displayed on the first network client before making the selection of a message from a pre-selection (recommendation) of messages.

## Claims

1. A method for distributing personalized messages to one or more network clients (7; A, C) participating in a real-time conversation over a network, the method comprising:
providing a database of available message topics, wherein each message topic is associated with one or more pre-defined messages;
pre-selecting a plurality of message topics from the database of available message topics;
transmitting the pre-selected message topics to a first network client (A) participating in the real-time conversation;
recording at the first network client (A) a selection of one message topic from the pre-selected message topics;
transmitting a message associated with the selected message topic (M3) to a second network client (C) participating in the real-time conversation with the first network client (A), wherein the second network client (C) is different from the first network client (A);
displaying the message associated with the selected message topic (M3) at the second network client (C).

2. The method according to claim 1, **characterized by**
establishing a communication link between at least two network clients (A, C) to provide the real-time conversation only after the selection of one message topic is recorded.

3. The method according to claim 2, **characterized by**
displaying the message associated with the selected message topic (M3) at the second network client (C) after the communication link is terminated.

4. The method according to one of claims 1 to 3, **characterized in that** the selected message topic (M3) is associated with a group of messages, and the message transmitted to the second network client (C) is picked at random from the group of messages.

5. The method according to one of claims 1 to 4, **characterized by**:
sending a confirmation of the displayed message together with an identification of the network client (C) displaying the message to a reward service (B) and/or to a billing service, in particular when the displayed selected message is interacted with.

6. The method according to one of claims 1 to 5, **characterized by**:
providing a user database comprising entries of registered users and their associated network client;
recording and storing for each registered user a profile, user preferences, past selections of message topics and/or past received messages

7. The method according to claim 6, **characterized by**:
selecting a plurality of message topics based on a stored user profile and user preferences associated with the first network client (A) and/or the second network client (C).

8. The method according to one of claims 1 to 7, **characterized by**:
selecting a plurality of message topics based on targeting requirements associated with each message topic, in particular targeting requirements matching a user profile or preferences.

9. A system for providing real-time conversations over a network and distributing personalized messages to one or more network clients (7; A, B) participating in a real-time conversation, the system comprising:
a database of available message topics, wherein each message topic is associated with one or more pre-defined messages;
means for pre-selecting a plurality of message topics from the database of available message topics and transmitting the pre-selected message topics to a first network client (A) participating in the real-time conversation;
means for receiving a selection of one message topic from the pre-selected message topics from the first network client (A) and transmitting a message associated with the selected message topic (M3) to a second network client (C) participating in the real-time conversation with the first network client (A), and
means for displaying the message associated with the selected message topic (M3)at the second network client (C),
wherein the second network client (C) is different from the first network client.

10. The system according to claim 9, **characterized in that** the selected message topic is associated with a group of messages, and the system comprises means for picking the message transmitted to the second network client (C) at random from the group of messages.

11. The system according to claim 9 or 10, **characterized in that** the system further comprises a user database comprising entries of registered users and their associated network clients and configured to record and store user profiles, user preferences and received message selections.

## Patentansprüche

1. Ein Verfahren zur Verteilung von personalisierten Nachrichten an einen oder mehrere Netzwerk-Clients (7; A, C), die über ein Netzwerk an einer Echtzeit-Konversation teilnehmen, wobei das Verfahren Folgendes aufweist:
Bereitstellen einer Datenbank mit verfügbaren Nachrichtenthemen, wobei jedes Nachrichtenthema mit einer oder mehreren vordefinierten Nachrichten verknüpft ist;
Vorauswählen einer Vielzahl von Nachrichtenthemen aus der Datenbank der verfügbaren Nachrichtenthemen;
Übertragen der vorausgewählten Nachrichtenthemen an einen ersten Netzwerk-Client (A), der an der Echtzeit-Konversation teilnimmt;
Aufzeichnen einer Auswahl von einem Nachrichtenthema aus den vorausgewählten Nachrichtenthemen am ersten Netzwerk-Client (A);
Übertragen einer Nachricht, die mit dem ausgewählten Nachrichtenthema (M3) verknüpft ist, an einen zweiten Netzwerk-Client (C), der an der Echtzeit-Konversation mit dem ersten Netzwerk-Client (A) teilnimmt, wobei der zweite Netzwerk-Client (C) sich vom ersten Netzwerk-Client (A) unterscheidet;
Anzeigen der Nachricht, die mit dem ausgewählten Nachrichtenthema (M3) verknüpft ist, auf dem zweiten Netzwerk-Client (C) .

2. Das Verfahren nach Anspruch 1, **gekennzeichnet durch** das Herstellen einer Kommunikationsverbindung zwischen mindestens zwei Netzwerk-Clients (A, C), um die Echtzeit-Konversation erst nach der Aufzeichnung der Auswahl eines Nachrichtenthemas bereitzustellen.

3. Das Verfahren nach Anspruch 2, **gekennzeichnet durch** das Anzeigen der mit dem ausgewählten Nachrichtenthema (M3) verknüpften Nachricht auf dem zweiten Netzwerk-Client (C), nachdem die Kommunikationsverbindung beendet wurde.

4. Das Verfahren nach einem der Ansprüche 1 bis 3, **dadurch gekennzeichnet, dass** das ausgewählte Nachrichtenthema (M3) mit einer Gruppe von Nachrichten verknüpft ist, und die an den zweiten Netzwerk-Client (C) übertragene Nachricht nach dem Zufallsprinzip aus der Gruppe der Nachrichten ausgewählt wird.

5. Das Verfahren nach einem der Ansprüche 1 bis 4, **gekennzeichnet durch**:
Senden einer Bestätigung der angezeigten Nachricht zusammen mit einer Identifizierung des Netzwerk-Clients (C), der die Nachricht anzeigt, an einen Belohnungsdienst (B) und/oder an einen Abrechnungsdienst, insbesondere wenn mit der angezeigten ausgewählten Nachricht interagiert wird.

6. Das Verfahren nach einem der Ansprüche 1 bis 5, **gekennzeichnet durch**:
Bereitstellen einer Benutzerdatenbank, die Einträge von registrierten Benutzer und den zugehörigen Netzwerk-Clients aufweist;
Aufzeichnen und Speichern eines Profils, Benutzerpräferenzen, frühere Auswahl von Nachrichtenthemen und/oder früher empfangene Nachrichten für jeden registrierten Benutzer.

7. Das Verfahren nach Anspruch 6, **gekennzeichnet durch**:
Auswählen einer Vielzahl von Nachrichtenthemen auf der Grundlage eines gespeicherten Benutzerprofils und Benutzerpräferenzen, die mit dem ersten Netzwerk-Client (A) und/oder dem zweiten Netzwerk-Client (C) verknüpft sind.

8. Das Verfahren nach einem der Ansprüche 1 bis 7, **gekennzeichnet durch**:
Auswählen einer Vielzahl von Nachrichtenthemen auf der Grundlage von Zielanforderungen, die mit jedem Nachrichtenthema verknüpft sind, insbesondere Zielanforderungen, die einem Benutzerprofil oder Präferenzen entsprechen.

9. Ein System zur Bereitstellung von Echtzeit-Konversationen über ein Netzwerk und die Verteilung von personalisierten Nachrichten an eine oder mehrere Netzwerk-Clients (7; A, B), die an einer Echtzeit-Konversation teilnehmen, wobei das System Folgendes aufweist:
eine Datenbank mit verfügbaren Nachrichtenthemen, wobei jedes Nachrichtenthema mit einer oder mehreren vordefinierten Nachrichten verknüpft ist;
Mittel zur Vorauswahl einer Vielzahl von Nachrichtenthemen aus der Datenbank der verfügbaren Nachrichtenthemen und die Übertragung der vorausgewählten Nachrichtenthemen an einen ersten Netzwerk-Client (A), der an dem Echtzeit-Konversation teilnimmt;
Mittel zum Empfang einer Auswahl eines Nachrichtenthemas aus den vorausgewählten Nachrichtenthemen vom ersten Netzwerk-Client (A) und Übertragung einer mit dem ausgewählten Nachrichtenthema (M3) verknüpften Nachricht an einen zweiten Netzwerk-Client (C), der an der Echtzeit-Konversation mit dem ersten Netzwerk-Client (A) teilnimmt, und
Mittel zum Anzeigen der mit dem ausgewählten Nachrichtenthema (M3) verknüpften Nachricht auf dem zweiten Netzwerk-Client (C), wobei der zweite Netzwerk-Client (C) sich vom ersten Netzwerk-Client unterscheidet.

10. Das System nach Anspruch 9, **dadurch gekennzeichnet, dass** das ausgewählte Nachrichtenthema mit einer Gruppe von Nachrichten verknüpft ist, und das System Mittel zum zufälligen Auswählen der an den zweiten Netzwerk-Client (C) übertragenen Nachricht aus der Gruppe von Nachrichten aufweist.

11. Das System nach Anspruch 9 oder 10, **dadurch gekennzeichnet, dass** das System ferner eine Benutzerdatenbank aufweist, die Einträge der registrierten Benutzer und ihrer verknüpften Netzwerk-Clients aufweist und so konfiguriert ist, dass sie Benutzerprofile, Benutzereinstellungen und empfangene ausgewählte Nachrichten aufzeichnet und speichert.

## Revendications

1. Procédé de distribution de messages personnalisés à un ou plusieurs clients de réseau (7 ; A, C) qui participent à une conversion en temps réel sur un réseau, le procédé comprenant :
le fait de prévoir une base de données de sujets de messages disponibles, dans lequel chaque sujet de message est associé à un ou plusieurs messages prédéfinis ;
la présélection d'une pluralité de sujets de messages dans la base de données de sujets de messages disponibles ;
la transmission des sujets de messages présélectionnés à un premier client de réseau (A) qui participe à la conversion en temps réel ;
l'enregistrement, au niveau du premier client de réseau (A), d'une sélection d'un sujet de message parmi les sujets de messages présélectionnés ;
la transmission d'un message associé au sujet de message sélectionné (M3) à un deuxième client de réseau (C) qui participe à la conversion en temps réel avec le premier client de réseau (A), dans lequel le deuxième client de réseau (C) est différent du premier client de réseau (A) ;
l'affichage du message associé au sujet de message sélectionné (M3) au niveau du deuxième client de réseau (C).

2. Procédé selon la revendication 1, **caractérisé par**
l'établissement d'une liaison de communication entre au moins deux clients de réseau (A, C) afin d'effectuer la conversion en temps réel uniquement une fois que la sélection d'un sujet de message a été enregistrée.

3. Procédé selon la revendication 2, **caractérisé par**
l'affichage du message associé au sujet de message sélectionné (M3) au niveau du deuxième client de réseau (C) une fois que la liaison de communication est terminée.

4. Procédé selon l'une des revendications 1 à 3, **caractérisé en ce que** le sujet de message sélectionné (M3) est associé à un groupe de messages, et le message transmis au deuxième client de réseau (C) est choisi de manière aléatoire dans le groupe de messages.

5. Procédé selon l'une des revendications 1 à 4, **caractérisé par** :
l'envoi d'une confirmation du message affiché avec une identification du client de réseau (C) qui affiche le message à un service de récompense (B) et/ou un service de facturation, en particulier lorsque le message sélectionné affiché fait l'objet d'une interaction.

6. Procédé selon l'une des revendications 1 à 5, **caractérisé par** :
le fait de prévoir une base de données d'utilisateurs comprenant des entrées d'utilisateurs inscrits et de leur client de réseau associé ;
l'enregistrement et le stockage, pour chaque utilisateur inscrit, d'un profil, de préférences utilisateur, des précédentes sélections de sujets de messages et/ou des précédents messages reçus.

7. Procédé selon la revendication 6, **caractérisé par** :
la sélection d'une pluralité de sujets de messages sur la base d'un profil d'utilisateur stocké et de préférences utilisateur associées au premier client de réseau (A) et/ou au deuxième client de réseau (C).

8. Procédé selon l'une des revendications 1 à 7, **caractérisé par** :
la sélection d'une pluralité de sujets de messages sur la base d'exigences de ciblage associées à chaque sujet de message, en particulier d'exigences de ciblage qui correspondent à un profil ou à des préférences d'utilisateur.

9. Système destiné à effectuer des conversations en temps réel sur un réseau et à distribuer des messages personnalisés à un ou plusieurs clients de réseau (7 ; A, B) qui participent à une conversion en temps réel, le système comprenant :
une base de données de sujets de messages disponibles, dans lequel chaque sujet de message est associé à un ou plusieurs messages prédéfinis ;
un moyen destiné à présélectionner une pluralité de sujets de messages dans la base de données de sujets de messages disponibles et à transmettre les sujets de messages présélectionnés à un premier client de réseau (A) qui participe à la conversion en temps réel ;
un moyen destiné à recevoir une sélection d'un sujet de message parmi les sujets de messages présélectionnés de la part du premier client de réseau (A) et à transmettre un message associé au sujet de message sélectionné (M3) à un deuxième client de réseau (C) qui participe à la conversion en temps réel avec le premier client de réseau (A), et
un moyen destiné à afficher le message associé au sujet de message sélectionné (M3) au niveau du deuxième client de réseau (C), dans lequel le deuxième client de réseau (C) est différent du premier client de réseau.

10. Système selon la revendication 9, **caractérisé en ce que** le sujet de message sélectionné est associé à un groupe de messages, et le système comprend un moyen destiné à choisir le message transmis au deuxième client de réseau (C) de manière aléatoire dans le groupe de messages.

11. Système selon la revendication 9 ou 10, **caractérisé en ce que** le système comprend en outre une base de données d'utilisateurs comprenant des entrées d'utilisateurs inscrits et de leurs clients de réseau associés et configurée pour enregistrer et stocker des profils d'utilisateurs, des préférences utilisateur et les sélections de messages reçues.
